# EUROPEAN PATENT APPLICATION

(11) **EP 4 287 386 A1**
(43) Date of publication of application: **06.12.2023**
(21) Application number: 21964439.0
(22) Date of filing: 19.11.2021
(51) Int. Cl.: H01M 50/543

(54) **BATTERY CELL, BATTERY, ELECTRIC DEVICE, AND METHOD AND APPARATUS FOR MANUFACTURING BATTERY CELL**

(71) Applicant: Contemporary Amperex Technology Co., Limited, Fujian PRC 352100 (CN)
(72) Inventor: WU, Yizhen, Ningde, Fujian 352100 (CN)
(74) Representative: Gong, Jinping
(86) International application number: PCT/CN2021/131936
(87) International publication number: WO 2023/087285

(57) **Abstract**

Embodiments of this application provide a battery unit, a battery, an electric device, and a manufacturing method and device of battery unit, and pertain to the field of battery technologies. The battery unit includes a housing, a battery cell, an end cover assembly, and a current collection member. The battery cell includes a body and tabs, where the tab protrudes from an end of the body in a first direction. The housing has an opening, and the housing is configured to accommodate the battery cell. The end cover assembly is configured to cover the opening. In the first direction, the current collection member is located on a side of the body facing the end cover assembly, and the current collection member is configured to connect the tab and the end cover assembly. The tab includes a first connection portion configured to be connected to the current collection member, and in the first direction, the first connection portion is configured to be located on a side of the current collection member facing the end cover assembly. In the battery unit with such structure, the space between the current collection member and the end cover assembly is fully used, and the space occupied by the tab inside the housing is reduced, which makes more space for the body of the electrode assembly, and is conducive to increasing energy density of the battery unit.

## Description

### TECHNICAL FIELD

This application relates to the field of battery technologies and specifically to a battery unit, a battery, an electric device, and a manufacturing method and device of battery unit.

### BACKGROUND

With the development of new energy technologies, batteries have been more widely used, for example, in mobile phones, laptop computers, electric bicycles, electric vehicles, electric airplanes, electric ships, electric toy cars, electric toy ships, electric toy airplanes, and electric tools.

In battery technologies, both safety and performance of batteries need to be considered, and magnitude of energy density of batteries affects the performance of the batteries. Therefore, how energy density of battery units is increased is an urgent technical problem that needs to be solved in battery technologies.

### SUMMARY

Embodiments of this application provide a battery unit, a battery, an electric device, and a manufacturing method and device of battery unit, facilitating increasing of energy density of the battery unit.

According to a first aspect, an embodiment of this application provides a battery unit including: a battery cell including a body and tabs, where the tab protrudes from an end of the body in a first direction; a housing having an opening, where the housing is configured to accommodate the battery cell; an end cover assembly configured to cover the opening; and a current collection member, where in the first direction, the current collection member is located on a side of the body facing the end cover assembly, and the current collection member is configured to connect the tab and the end cover assembly; where the tab includes a first connection portion configured to be connected to the current collection member, and in the first direction, the first connection portion is configured to be located on a side of the current collection member facing the end cover assembly.

In the foregoing technical solution, the first connection portion of the tab that is connected to the current collection member is located on the side of the current collection member facing the end cover assembly, such that the space between the current collection member and the end cover assembly is fully used, which reduces space occupied by the tab inside the housing, makes more space for the body of the electrode assembly, and is conducive to increasing energy density of the battery unit.

In some embodiments, the current collection member is provided with foldable portions, where the foldable portion is foldably disposed on the side of the current collection member facing the end cover assembly in the first direction, and the foldable portion is configured to be connected to the first connection portion.

In the foregoing technical solution, the current collection member is provided with the foldable portions such that the first connection portion can be connected to the foldable portion before the foldable portion is folded, which is more convenient for electrical connection between the first connection portion and the current collection member. After the first connection portion is connected to the foldable portion, the foldable portion can be folded relative to the current collection member such that the first connection portion is naturally arranged on the side of the current collection member facing the end cover assembly, improving shaping effect on the tab.

In some embodiments, in the first direction, the first connection portion and the foldable portion are stacked, and the first connection portion is located on a side of the foldable portion facing the end cover assembly.

In the foregoing technical solution, the first connection portion and the foldable portion are stacked in the first direction, and the first connection portion is located on the side of the foldable portion facing the end cover assembly. This structure ensures a large current flow area between the first connection portion and the foldable portion and makes the first connection portion and the foldable portion compact as a whole, reducing overall thickness of the first connection portion and the foldable portion, and reducing the risk that the space inside the housing for accommodating the body is reduced due to increasing of distance between the current collection member and the end cover assembly caused by excessively large overall thickness of the first connection portion and the foldable portion.

In some embodiments, the foldable portion is foldably connected to an edge of the current collection member.

In the foregoing technical solution, the foldable portion is foldably connected to the edge of the current collection member such that the foldable portion protects the tab, reducing the risk of the tab being cut by the edge of the current collection member.

In some embodiments, foldable portions are connected to two opposite ends of the current collection member in a second direction, where the second direction is perpendicular to the first direction; and the battery cell includes two tabs spaced apart on the body along the second direction, where the first connection portions of the two tabs are connected to two foldable portions respectively.

In the foregoing technical solution, the first connection portions of the two tabs of the battery cell are connected to the foldable portions on the current collection member respectively, which can improve stability of the current collection member inside the housing and reduce the risk of the current collection member shaking inside the housing.

In some embodiments, the foldable portion and the current collection member are integrally formed.

In the foregoing technical solution, the foldable portion and the current collection member are integrally formed in a simple manner to guarantee firmness between the two.

In some embodiments, the tab bends around the current collection member; and the tab further includes a second connection portion, where the second connection portion is configured to connect the body and the first connection portion, and in the first direction, the second connection portion is located on a side of the current collection member facing the body.

In the foregoing technical solution, the tab bends around the current collection member such that the current collection member provides good limit for the tab, thus reducing the risk of the tab inserting into the body.

In some embodiments, the end cover assembly includes: an end cover configured to cover the opening; an electrode terminal provided on the end cover and configured to be electrically connected to the current collection member; and an insulator provided on a side of the end cover facing the body in the first direction, where the insulator is configured to separate the end cover from the battery cell; and the current collection member includes a first current collection portion configured to be connected to the first connection portion, where in the first direction, an accommodating gap is formed between the first current collection portion and the insulator, and the accommodating gap is configured to accommodate the first connection portion.

In the foregoing technical solution, the accommodating gap is formed between the first current collection portion of the current collection member and the insulator, and the first connection portion is accommodated in the accommodating gap, such that the space between the first current collection portion and the insulator is effectively used, which reduces the space occupied by the tab inside the housing, makes more space for the body of the electrode assembly, and is conducive to increasing the energy density of the battery unit.

In some embodiments, the insulator has an inner surface facing the body, and the insulator is provided with a first concave portion recessed from the inner surface in a direction facing away from the body, where the first concave portion is configured to accommodate at least part of the first current collection portion; and in the first direction, the accommodating gap is formed between the first current collection portion and the bottom surface of the first concave portion.

In the foregoing technical solution, the insulator is provided with the first concave portion, and at least part of the first current collection portion is accommodated in the first concave portion, which reduces the space occupied by the first current collection portion inside the housing to make more space for the body, and is conducive to increasing the energy density of the battery unit.

In some embodiments, the insulator has an outer surface facing away from the body, a first convex portion is convexly provided at a position of the outer surface corresponding to the first concave portion, and the first concave portion is recessed from the inner surface to inside the first convex portion in the direction facing away from the body; and the end cover is provided with a second concave portion, where the second concave portion is configured to accommodate at least part of the first convex portion.

In the foregoing technical solution, at least part of the first convex portion being disposed in the second concave portion can make the insulator and the end cover more compact in structure and reduce the space occupied by the insulator inside the housing. The first concave portion being recessed from the inner surface to inside the first convex portion in the direction facing away from the body increases a recess depth of the first concave portion, allowing the first current collection portion to be accommodated at a deeper position of the first concave portion to make more space for the body.

In some embodiments, the current collection member further includes a second current collection portion, where the second current collection portion is connected to the first current collection portion, and the second current collection portion is configured to be electrically connected to the electrode terminal; and the first current collection portion and the second current collection portion are disposed in a staggered manner in the first direction such that the current collection member has an accommodating space formed on a side of the first current collection portion facing the body, where the accommodating space is configured to accommodate part of the tab.

In the foregoing technical solution, the first current collection portion and the second current collection portion are disposed in a staggered manner in the first direction such that the current collection member has the accommodating space formed on the side of the first current collection portion facing the body, allowing the tab to move up as a whole to make more space for the body, which is conducive to increasing the energy density of the battery unit.

According to a second aspect, an embodiment of this application provides a battery including: the battery unit according to any one of the embodiments of the first aspect; and a box configured to accommodate the battery unit.

According to a third aspect, an embodiment of this application provides an electric device including the battery according to any one of the embodiments of the second aspect.

According to a fourth aspect, an embodiment of this application provides a manufacturing method of battery unit. The manufacturing method includes: providing a battery cell, where the battery cell includes a body and tabs, the tab protruding from an end of the body in a first direction, and the tab including a first connection portion; providing a housing, where the housing has an opening; providing an end cover assembly; providing a current collection member; connecting the current collection member to the first connection portion and the end cover assembly; accommodating the battery cell in the housing; and covering the opening with the end cover assembly; where in the first direction, the current collection member is located on a side of the body facing the end cover assembly, and the first connection portion is located on a side of the current collection member facing the end cover assembly.

In some embodiments, the current collection member is provided with foldable portions; and the connecting the current collection member to the tab and the end cover assembly includes: connecting the first connection portion to the foldable portion; folding the foldable portion relative to the current collection member such that the tab bends around the current collection member; and connecting the end cover assembly to the current collection member such that the first connection portion is located on the side of the current collection member facing the end cover assembly.

According to a fifth aspect, an embodiment of this application further provides a manufacturing device of battery unit. The manufacturing device includes: a first provision means configured to provide a battery cell, where the battery cell includes a body and tabs, the tab protruding from an end of the body in a first direction, and the tab including a first connection portion; a second provision means configured to provide a housing, where the housing has an opening; a third provision means configured to provide an end cover assembly; a fourth provision means configured to provide a current collection member; and an assembly means configured to connect the current collection member to the first connection portion and the end cover assembly, further configured to accommodate the battery cell in the housing, and further configured to cover the opening with the end cover assembly; where in the first direction, the current collection member is located on a side of the body facing the end cover assembly, and the first connection portion is located on a side of the current collection member facing the end cover assembly.

### BRIEF DESCRIPTION OF DRAWINGS

To describe the technical solutions of the embodiments of this application more clearly, the following briefly describes the accompanying drawings required for describing the embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic structural diagram of a vehicle according to some embodiments of this application;
FIG. 2 is a schematic structural diagram of a battery according to some embodiments of this application;
FIG. 3 is an exploded view of a battery unit according to some embodiments of this application;
FIG. 4 is a cross-sectional view of the battery unit shown in FIG. 3;
FIG. 5 is a partial cross-sectional view of the battery unit shown in FIG. 3;
FIG. 6 is an axonometric diagram of a current collector shown in FIG. 5;
FIG. 7 is a front view of a current collection member shown in FIG. 6;
FIG. 8 is a flowchart of a manufacturing method of battery unit according to some embodiments of this application;
FIG. 9 is a flowchart of a manufacturing method of battery unit according to some other embodiments of this application; and
FIG. 10 is a schematic block diagram of a manufacturing device of battery unit according to some embodiments of this application.

Reference signs: 10. box; 11. first portion; 12. second portion; 20. battery unit; 21. housing; 22. battery cell; 221. body; 222. tab; 222a. positive electrode tab; 222b. negative electrode tab; 2221. first connection portion; 2222. second connection portion; 23. end cover assembly; 231. end cover; 232. insulator; 2321. inner surface; 2322. first concave portion; 2322a. bottom surface; 2323. outer surface; 2324. first convex portion; 233. electrode terminal; 233a. positive electrode terminal; 233b. negative electrode terminal; 24. current collection member; 241. foldable portion; 242. first current collection portion; 243. second current collection portion; 244. accommodating space; 245. boss; 246. third current collection portion; 25. pressure relief mechanism; 26. accommodating gap; 100. battery; 200. controller; 300. motor; 1000. vehicle; 2000. manufacturing device; 2100. first provision means; 2200. second provision means; 2300. third provision means; 2400. fourth provision means; 2500. assembly means; Z. first direction; X. second direction; and Y third direction.

### DESCRIPTION OF EMBODIMENTS

To make the objectives, technical solutions, and advantages of the embodiments of this application clearer, the following clearly and completely describes the technical solutions in the embodiments of this application with reference to the accompanying drawings in the embodiments of this application. Apparently, the described embodiments are some but not all embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by persons skilled in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection, and may refer to a direct connection, an indirect connection via an intermediate medium, or an internal communication between two elements. Persons of ordinary skills in the art can understand specific meanings of these terms in this application as appropriate to specific situations.

In the embodiments of this application, like reference signs denote like components, and for brevity, in different embodiments, detailed descriptions of like components are not repeated. It should be understood that, as shown in the accompanying drawings, sizes such as thickness, length, and width of various components and sizes such as thickness, length, and width of integrated devices in the embodiments of this application are merely for illustrative purposes and should not constitute any limitations on this application.

In this application, "a plurality of" means more than two (inclusive).

In this application, the battery unit may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery unit may be cylindrical, flat, cuboid, or of other shapes, which is not limited in the embodiments of this application either. Battery units are typically divided into three types by packaging method: cylindrical unit, prismatic unit, and pouch unit. The type of battery is not limited in the embodiments of this application either.

The battery mentioned in the embodiments of this application is a single physical module that includes one or more battery units for providing a higher voltage and capacity. For example, the battery mentioned in this application may include a battery module, a battery pack, or the like. A battery typically includes a box configured to enclose one or more battery units. The box can prevent liquids or other foreign matter from affecting charging or discharging of the battery unit.

The battery unit includes an electrode assembly and an electrolyte. The electrode assembly includes a positive electrode plate, a negative electrode plate, and a separator. Working of the battery unit mainly relies on migration of metal ions between the positive electrode plate and the negative electrode plate. The positive electrode plate includes a positive electrode current collector and a positive electrode active substance layer, where the positive electrode active substance layer is applied on a surface of the positive electrode current collector. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer, where the negative electrode active substance layer is applied on a surface of the negative electrode current collector. The negative electrode current collector may be made of copper, and the negative electrode active substance may be carbon, silicon, or the like. The separator may be made of PP (polypropylene, polypropylene), PE (polyethylene, polyethylene), or the like. In addition, the electrode assembly may be a winding structure or a laminated structure, but the embodiments of this application are not limited thereto.

Currently, a battery unit typically includes a housing, a battery cell, an end cover assembly, and a current collection member. A tab of the battery cell is electrically connected to the end cover assembly via the current collection member. The battery cell is accommodated in the housing. The end cover assembly covers an opening of the housing to provide a closed space for the battery cell and an electrolyte.

The inventor has found that in the battery unit, the part of which the tab of the battery cell is connected to the current collection member is located on a side of the current collection member facing away from the end cover assembly, and the tab occupies part of space inside the housing, such that the space inside the housing that can be provided for the body of the battery cell is reduced, and energy density of the battery unit is also reduced. The inventor has noted that for a common battery unit, after the current collection member is connected to the end cover assembly, a gap is present between part of the current collection member and the end cover assembly, and the space at this gap position is not effectively used.

In view of this, embodiments of this application provide a battery unit. The battery unit includes a housing, a battery cell, an end cover assembly, and a current collection member. The battery cell includes a body and tabs, where the tab protrudes from an end of the body in a first direction. The housing has an opening, and the housing is configured to accommodate the battery cell. The end cover assembly is configured to cover the opening. In the first direction, the current collection member is located on a side of the body facing the end cover assembly, and the current collection member is configured to connect the tab and the end cover assembly. The tab includes a first connection portion configured to be connected to the current collection member, and in the first direction, the first connection portion is configured to be located on a side of the current collection member facing the end cover assembly.

In such battery unit, the first connection portion of the tab is disposed on the side of the current collection member facing the end cover assembly, such that the space between the current collection member and the end cover assembly is fully used, and the space occupied by the tab inside the housing is reduced, which makes more space for the body of the battery cell, and is conducive to increasing the energy density of the battery unit.

The battery unit described in the embodiments of this application is applicable to batteries and electric devices using a battery.

The electric device may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric device.

For ease of description, the electric device being a vehicle is used as an example for description of the following embodiments.

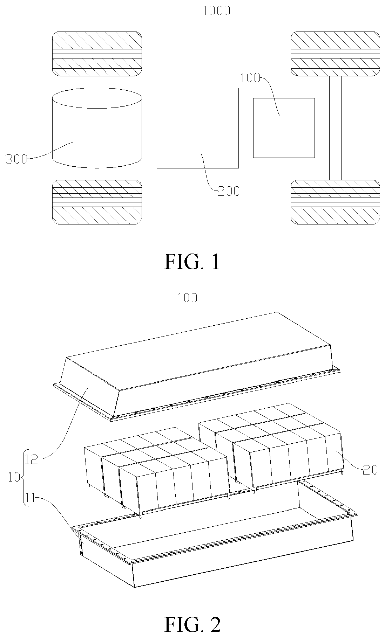

Referring to FIG. 1, FIG. 1 is a schematic structural diagram of a vehicle 1000 according to some embodiments of this application. The vehicle 1000 is provided with a battery 100 inside, where the battery 100 may be disposed at the bottom, front or rear of the vehicle 1000. The battery 100 may be configured to supply power to the vehicle 1000. For example, the battery 100 may be used as an operational power source for the vehicle 1000.

The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

Referring to FIG. 2, FIG. 2 is a schematic structural diagram of a battery 100 according to some embodiments of this application. The battery 100 includes a box 10 and a battery unit 20, where the box 10 is configured to accommodate the battery unit 20.

The box 10 is a component for accommodating the battery unit 20, providing an accommodating space for the battery unit 20. The box 10 may be a variety of structures. In some embodiments, the box 10 may include a first portion 11 and a second portion 12. The first portion 11 and the second portion 12 fit together to jointly define a space for accommodating the battery unit 20. The first portion 11 and the second portion 12 may be of various shapes, such as cylinder or cuboid. The first portion 11 may be a hollow structure with one side open, and the second portion 12 may also be a hollow structure with one side open, where the open side of the second portion 12 is engaged with the open side of the first portion 11 so as to form a box 10 having an accommodating space. Alternatively, the first portion 11 may be a hollow structure with one side open, and the second portion 12 may be a plate structure, where the second portion 12 is engaged with the open side of the first portion 11 so as to form a box 10 having an accommodating space. The first portion 11 and the second portion 12 may be sealed by a sealing element, and the sealing element may be a sealing ring, a sealing adhesive, or the like.

In the battery 100, the battery unit 20 may be provided in one or more. If a plurality of battery units 20 are provided, the plurality of battery units 20 may be connected in series, parallel, or series-parallel, where being connected in series-parallel means a combination of series and parallel connections of the plurality of battery units 20. A battery module may be first formed by connecting a plurality of battery cells 20 in series, parallel, or series-parallel, and then a plurality of battery modules are connected in series, parallel, or series-parallel to form an entirety which is accommodated in the box 10. It is also possible that all the battery units 20 are directly connected in series, parallel, or series-parallel to form an entirety which is then accommodated in the box 10.

In some embodiments, the battery 100 may further include a busbar, and the plurality of battery units 20 may be electrically connected via the busbar, such that the plurality of battery units 20 are connected in series, parallel, or series-parallel. The busbar may be a conductor made of metal, for example, copper, iron, aluminum, stainless steel, or aluminum alloy.

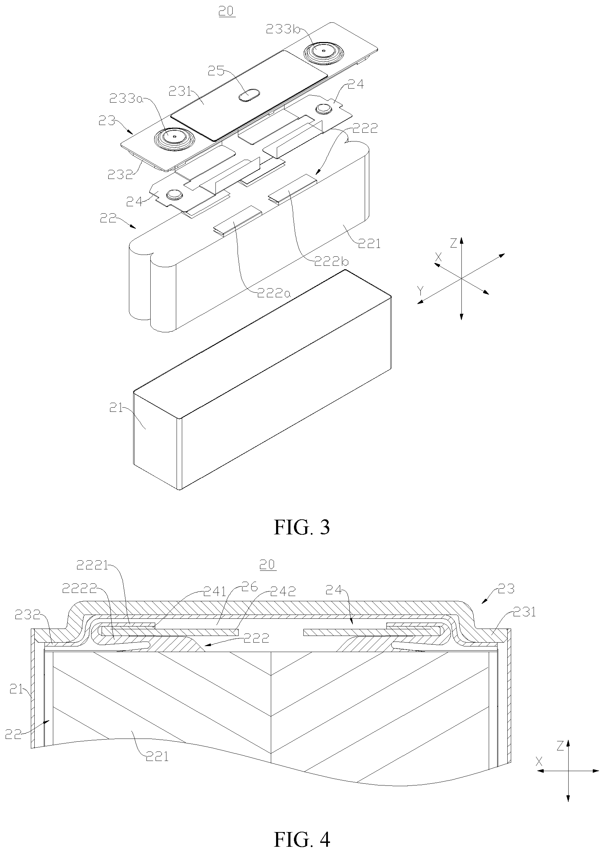

Referring to FIG. 3, FIG. 3 is an exploded view of a battery unit 20 according to some embodiments of this application. The battery unit 20 may include a housing 21, a battery cell 22, an end cover assembly 23, and a current collection member 24.

The housing 21 is a component for accommodating the battery cell 22. The housing 21 may be a hollow structure with an opening formed at one end; or the housing 21 may be a hollow structure with openings formed at two opposite ends. The housing 21 may be made of various materials such as copper, iron, aluminum, steel, and aluminum alloy. The housing 21 may be of various shapes, such as cylinder or cuboid. For example, in FIG. 3, the housing 21 is a cuboid structure.

The battery cell 22 is a component in which electrochemical reactions take place in the battery unit 20. The battery cell 22 includes a body 221 and tabs 222, where the tab 222 protrudes from an end of the body 221, and the tabs 222 include a positive electrode tab 222a and a negative electrode tab 222b. The battery cell 22 may be one electrode assembly or may be formed by a plurality of electrode assemblies together. The electrode assembly may include a positive electrode plate, a negative electrode plate, and a separator. The electrode assembly may be a winding structure formed by winding the positive electrode plate, the separator, and the negative electrode plate, or may be a laminated structure formed by laminating the positive electrode plate, the separator, and the negative electrode plate.

The positive electrode plate may include a positive electrode current collector and positive electrode active substance layers applied on two opposite sides of the positive electrode current collector. The negative electrode plate may include a negative electrode current collector and negative electrode active substance layers applied on two opposite sides of the negative electrode current collector. The electrode assembly includes a body part, a positive electrode sub-tab, and a negative electrode sub-tab, where the body part is a part of the electrode assembly corresponding to a region of the electrode plate that is coated with the active substance layer, the positive electrode sub-tab may be a part of the positive electrode plate that is uncoated with the positive electrode active substance layer, and the negative electrode sub-tab may be a part of the negative electrode plate that is uncoated with the negative electrode active substance layer.

If the battery cell 22 includes only one electrode assembly, the body part of the electrode assembly is the body 221 of the battery cell 22, the positive electrode sub-tab of the electrode assembly is the positive electrode tab 222a of the battery cell 22, and the negative electrode sub-tab of the electrode assembly is the negative electrode tab 222b of the battery cell 22. If the battery cell 22 includes a plurality of electrode assemblies, the body 221 of the battery cell 22 may be formed by body parts of all the electrode assemblies together, the positive electrode tab 222a of the battery cell 22 may also be formed by positive electrode sub-tabs of the plurality of electrode assemblies together, and the negative electrode tab 222b of the battery cell 22 may be formed by negative electrode sub-tabs of the plurality of electrode assemblies together. Certainly, the positive electrode tab 222a and negative electrode tab 222b of the battery cell 22 may be provided in one or more. For example, in FIG. 3, the positive electrode tab 222a and negative electrode tab 222b of the battery cell 22 are both provided in two, the positive electrode sub-tabs of one part of the electrode assemblies are stacked and bent to form one positive electrode tab 222a, the negative electrode sub-tabs of the one part of the electrode assemblies are stacked and bent to form one negative electrode tab 222b, the positive electrode sub-tabs of the other part of the electrode assemblies are stacked and bent to form the other positive electrode tab 222a, and the negative electrode sub-tabs of the other part of the electrode assemblies are stacked and bent to form the other negative electrode tab 222b.

The end cover assembly 23 includes an end cover 231. The end cover 231 is a component that covers the opening of the housing 21 to isolate an internal environment of the battery unit 20 from an external environment. The end cover 231 covers the opening of the housing 21, and the end cover 231 and the housing 21 jointly define a sealed space for accommodating the battery cell 22, an electrolyte, and other components. The shape of the end cover 231 may fit the shape of the housing 21. For example, if the housing 21 is a cuboid structure, the end cover 231 is a rectangular plate-shaped structure that fits the housing 21. For another example, if the housing 21 is a cylindrical structure, the end cover 231 is a circular plate-shaped structure that fits the housing 21. The end cover 231 may also be made of various materials such as copper, iron, aluminum, steel, and aluminum alloy. The end cover 231 and the housing body 21 may be made of same or different materials.

The end cover assembly 23 may further include an insulator 232. The insulator 232 is a component that separates the end cover 231 from the battery cell 22 so as to insulate and isolate the end cover 231 from the battery cell 22. The insulator 232 is made of an insulating material, for example, rubber and plastic.

The end cover assembly 23 may further include an electrode terminal 233. The electrode terminal 233 is mounted on the end cover 231, and the electrode terminal 233 is configured to be electrically connected to the tab 222 of the electrode assembly to output electric energy of the battery unit 20. The electrode terminal 233 may include a positive electrode terminal 233a and a negative electrode terminal 233b, where the positive electrode terminal 233a is configured to be electrically connected to the positive electrode tab 222a, and the negative electrode terminal 233b is configured to be electrically connected to the negative electrode tab 222b.

The current collection member 24 is a component for implementing electrical connection between the end cover assembly 23 and the tab 222. The current collection member 24 may be connected between the electrode terminal 233 and the tab 222 to implement electrical connection between the end cover assembly 23 and the tab 222. Certainly, the positive electrode terminal 233a may be electrically connected to the positive electrode tab 222a via one current collection member 24, and the negative electrode terminal 233b may be electrically connected to the negative electrode tab 222b via another current collection member 24.

Still referring to FIG. 3, in some embodiments, each battery unit 20 may further include a pressure relief mechanism 25, where the pressure relief mechanism 25 is configured to be actuated when internal pressure or temperature of the battery unit 20 reaches a threshold, to relieve the internal pressure of the battery unit 20.

"Actuate" means that the pressure relief mechanism 25 is put into action or is activated to a given state such that the internal pressure and temperature of the battery unit 20 are relieved. The action that the pressure relief mechanism 25 is put into may include but is not limited to, for example, cracking, breaking, tearing, or opening at least part of the pressure relief mechanism 25. When the pressure relief mechanism 25 is actuated, the high-temperature and high-pressure substances inside the battery unit 20 are discharged as emissions from an actuated site. In this way, the battery unit 20 can relieve its pressure and temperature under controllable pressure or temperature, thereby avoiding more serious potential incidents. The emissions from the battery unit 20 include but are not limited to: electrolyte, fragments of positive and negative electrode plates and separator because of dissolution or breaking, and high-temperature and high-pressure gases and flames produced by reactions.

The pressure relief mechanism 25 may be a separate component mounted on the end cover 231. For example, the pressure relief mechanism 25 may be a component such as an explosion-proof valve, a rupture disk, a gas valve, a pressure relief valve, or a safety valve mounted on the end cover 231. The pressure relief mechanism 25 may alternatively be a part of the end cover 231. For example, the end cover 231 is provided with an indentation groove, and the pressure relief mechanism 25 is formed in the region defined by the indentation groove.

Referring to FIG. 4, FIG. 4 is a cross-sectional view of the battery unit 20 shown in FIG. 3. An embodiment of this application provides a battery unit 20, where the battery unit 20 includes a housing 21, a battery cell 22, an end cover assembly 23, and a current collection member 24. The battery cell 22 includes a body 221 and tabs 222, where the tab 222 protrudes from an end of the body 221 in a first direction Z. The housing 21 has an opening, and the housing 21 is configured to accommodate the battery cell 22. The end cover assembly 23 is configured to cover the opening. In the first direction Z, the current collection member 24 is located on a side of the body 221 facing the end cover assembly 23, and the current collection member 24 is configured to connect the tab 222 and the end cover assembly 23. The tab 222 includes a first connection portion 2221 configured to be connected to the current collection member 24, and in the first direction Z, the first connection portion 2221 is configured to be located on a side of the current collection member 24 facing the end cover assembly 23.

The current collection member 24 is a component for implementing electrical connection between the end cover assembly 23 and the tab 222. It is possible that only the positive electrode tab 222a is connected to the end cover assembly 23 via the current collection member 24, or it is possible that only the negative electrode tab 222b is connected to the end cover assembly 23 via the current collection member 24. For example, the positive electrode tab 222a and the negative electrode tab 222b are located at two ends of the body 221 in the first direction Z respectively, the positive electrode tab 222a is connected to the end cover assembly 23 via the current collection member 24, and the negative electrode tab 222b is connected to the housing 21. Certainly, alternatively, it is possible that the positive electrode tab 222a and the negative electrode tab 222b are each connected to one end cover assembly 23 via one current collection member 24. For example, the positive electrode tab 222a and the negative electrode tab 222b are both located at a same end of the body 221 in the first direction Z, the positive electrode tab 222a is connected to one end cover assembly 23 via one current collection member 24, and the negative electrode tab 222b is connected to another end cover assembly 23 via another current collection member 24. The current collection member 24 is a conductor made of copper, iron, aluminum, steel, aluminum alloy, or other materials.

Depending on different structures of the end cover assembly 23, the current collection member 24 may be connected to different positions of the end cover assembly 23. For example, in an embodiment in which the end cover assembly 23 includes only the end cover 231, the tab 222 is connected to the end cover 231 via the current collection member 24. For another example, in an embodiment in which the end cover assembly 23 includes the end cover 231, the insulator 232, and the electrode terminal 233, the tab 222 is connected to the electrode terminal 233 via the current collection member 24.

The first connection portion 2221 is a part of the tab 222 connected to the current collection member 24. The first connection portion 2221 and the current collection member 24 may be directly connected, for example, the two are directly welded. The first connection portion 2221 and the current collection member 24 may alternatively be indirectly connected, for example, the first connection portion 2221 and the current collection member 24 are indirectly connected via a conductive adhesive layer.

In FIG. 4, the first direction Z is a thickness direction of the end cover assembly 23.

In this embodiment of this application, the first connection portion 2221 of the tab 222 that is connected to the current collection member 24 is located on the side of the current collection member 24 facing the end cover assembly 23, such that the space between the current collection member 24 and the end cover assembly 23 is fully used, and the space occupied by the tab 222 inside the housing 21 is reduced, which makes more space for the body 221 of the electrode assembly, and is conducive to increasing energy density of the battery unit 20.

In some embodiments, the current collection member 24 is provided with foldable portions 241, where the foldable portion 241 is foldably disposed on the side of the current collection member 24 facing the end cover assembly 23 in the first direction Z, and the foldable portion 241 is configured to be connected to the first connection portion 2221.

The foldable portion 241 is a part that can be folded relative to the current collection member 24 and be connected to the first connection portion 2221. The current collection member 24 is provided with the foldable portion 241 connected to the first connection portion 2221 such that the current collection member 24 is indirectly connected to the first connection portion 2221 via the foldable portion 241 to implement electrical connection between the first connection portion 2221 and the current collection member 24. It can be understood that the foldable portion 241 is a conductor and may be made of copper, iron, aluminum, steel, aluminum alloy, or other materials.

The foldable portion 241 and the current collection member 24 may be integrally formed, a crease may be formed between the foldable portion 241 and the current collection member 24, and the foldable portion 241 can be folded with the crease as a rotation axis. The foldable portion 241 and the current collection member 24 may alternatively be separately shaped and then joined together. For example, the foldable portion 241 and the current collection member 24 are welded together. The foldable portion 241 and the first connection portion 2221 may also be connected in various manners, for example, by welding or by bonding of a conductive adhesive layer.

The current collection member 24 is provided with the foldable portions 241 such that the first connection portion 2221 can be connected to the foldable portion 241, for example, by welding or by bonding of a conductive adhesive layer, before the foldable portion 241 is folded, which is more convenient for electrical connection between the first connection portion 2221 and the current collection member 24. After the first connection portion 2221 is connected to the foldable portion 241, the foldable portion 241 can be folded relative to the current collection member 24 such that the first connection portion 2221 is naturally arranged on the side of the current collection member 24 facing the end cover assembly 23, improving shaping effect on the tab 222.

In some embodiments, still referring to FIG. 4, in the first direction Z, the first connection portion 2221 and the foldable portion 241 are stacked, and the first connection portion 2221 is located on a side of the foldable portion 241 facing the end cover assembly 23.

The first connection portion 2221 and the foldable portion 241 being stacked means that the first connection portion 2221 and the foldable portion 241 are in contact with each other and stacked together. The first connection portion 2221 and the foldable portion 241 may both have a sheet structure. Certainly, the foldable portion 241 and the current collection member 24 may alternatively be stacked in the first direction Z to eliminate the gap between the foldable portion 241 and the current collection member 24.

In this embodiment of this application, the first connection portion 2221 and the foldable portion 241 are stacked in the first direction Z, and the first connection portion 2221 is located on the side of the foldable portion 241 facing the end cover assembly 23. This structure ensures a large current flow area between the first connection portion 2221 and the foldable portion 241 and makes the first connection portion 2221 and the foldable portion 241 compact as a whole, reducing overall thickness of the first connection portion 2221 and the foldable portion 241, and reducing the risk that the space inside the housing 21 for accommodating the body 221 is reduced due to increasing of distance between the current collection member 24 and the end cover assembly 23 caused by excessively large overall thickness of the first connection portion 2221 and the foldable portion 241.

In other embodiments, the first connection portion 2221 may alternatively wrap the outside of the foldable portion 241 such that one part of the first connection portion 2221 is located on the side of the foldable portion 241 facing the end cover assembly 23 and the other part of the first connection portion 2221 is located between the foldable portion 241 and the current collection member 24, so as to increase the contact area between the first connection portion 2221 and the foldable portion 241.

In some embodiments, still referring to FIG. 4, the foldable portion 241 is foldably connected to an edge of the current collection member 24.

The edge of the current collection member 24 is an edge of an outer contour of the current collection member 24. For example, the foldable portion 241 is foldably connected to an edge of an end of the current collection member 24 in a second direction X, where the second direction X is perpendicular to the first direction Z. In FIG. 4, the second direction X is a width direction of the end cover assembly 23.

The foldable portion 241 is foldably connected to the edge of the current collection member 24, such that a crease can be formed at the edge of the current collection member 24, facilitating folding of the foldable portion 241, and the foldable portion 241 located at the edge of the current collection member 24 protects the tab 222, reducing the risk of the tab 222 being cut by the edge of the current collection member 24.

In some embodiments, still referring to FIG. 4, foldable portions 241 are connected to two opposite ends of the current collection member 24 in the second direction X, where the second direction X is perpendicular to the first direction Z. The battery cell 22 includes two tabs 222 spaced apart on the body 221 along the second direction X, where the first connection portions 2221 of the two tabs 222 are connected to two foldable portions 241 respectively.

The two tabs 222 connected to the two foldable portions 241 of the current collection member 24 are tabs 222 with a same polarity. For example, the two tabs 222 may both be positive electrode tabs 222a, or may both be negative electrode tabs 222b. For example, the two tabs 222 are both positive electrode tabs 222a. The battery cell 22 may include a plurality of electrode assemblies, where the plurality of electrode assemblies are arranged along the second direction X, positive electrode sub-tabs in one part of the plurality of electrode assemblies together form one positive electrode tab 222a, and positive electrode sub-tabs in the other part of the plurality of electrode assemblies together form the other positive electrode tab 222a.

The first connection portions 2221 of the two tabs 222 of the battery cell 22 are connected to the foldable portions on the current collection member 24 respectively, which can improve stability of the current collection member 24 inside the housing 21 and reduce the risk of the current collection member 24 shaking inside the housing 21.

In some embodiments, the foldable portion 241 and the current collection member 24 are integrally formed. The foldable portion 241 and the current collection member 24 are formed in a simple manner to guarantee firmness between the two.

In some embodiments, referring to FIG. 4, the tab 222 bends around the current collection member 24. The tab 222 further includes a second connection portion 2222, where the second connection portion 2222 is configured to connect the body 221 and the first connection portion 2221, and in the first direction Z, the second connection portion 2222 is located on a side of the current collection member 24 facing the body 221.

The second connection portion 2222 is a part of the tab 222 connected between the body 221 and the first connection portion 2221. The tab 222 bends around the current collection member 24, to be specific, the tab 222 has a part located on the side of the current collection member 24 facing the end cover assembly 23 and further has a part located on the side of the current collection member 24 facing the body 221. For example, the first connection portion 2221 of the tab 222 is located on the side of the current collection member 24 facing the end cover assembly 23, and the second connection portion 2222 of the tab 222 is located on the side of the current collection member 24 facing the body 221.

In an embodiment in which the current collection member 24 is provided with the foldable portion 241 and the first connection portion 2221 is connected to the foldable portion 241, the tab 222 bends around the current collection member 24 and the foldable portion 241 as a whole such that the current collection member 24 and the foldable portion 241 are located between the first connection portion 2221 and the second connection portion 2222 in the first direction Z, and that the first connection portion 2221 is located on the side of the foldable portion 241 facing the end cover assembly 23 and the second connection portion 2222 is located on the side of the current collection member 24 facing the body 221. In an actual assembly process, after the first connection portion 2221 is connected to the foldable portion 241, the tab 222 can bend around the current collection member 24 and the foldable portion 241 by folding the foldable portion 241 as a whole, such that a connection position between the first connection portion 2221 and the second connection portion 2222 is rounded.

For a common battery unit 20, the first connection portion 2221 of the tab 222 that is connected to the current collection member 24 is located on the side of the current collection member 24 facing the body 221. If the battery unit 20 is in a vibration environment, the body 221 of the battery cell 22 may move up and down inside the housing 21, and under joint extrusion of the body 221 and the current collection member 24, the tab 222 is prone to pierce the body 221, causing the tab 222 to damage the separator and causing the risk of a short circuit between positive and negative electrodes.

However, in this embodiment of this application, the tab 222 bends around the current collection member 24 such that the current collection member 24 provides good limit for the tab 222, thus reducing the risk of the tab 222 inserting into the body 221.

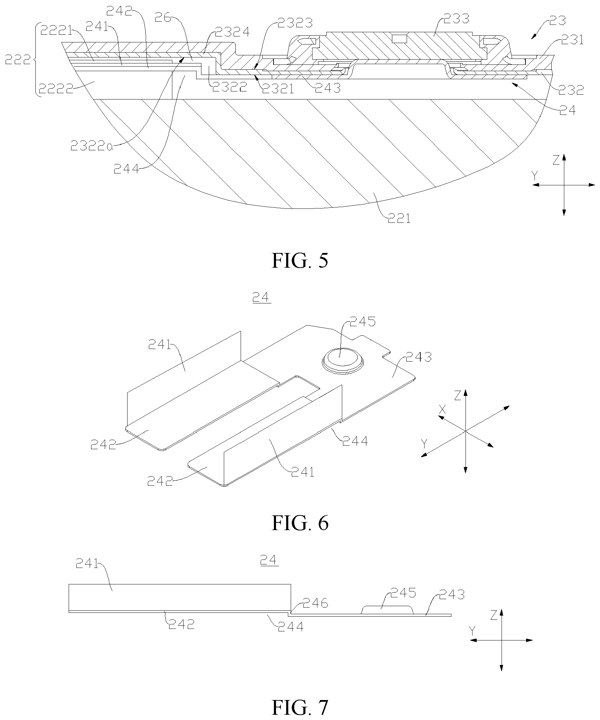

In some embodiments, referring to FIG. 5, FIG. 5 is a partial cross-sectional view of the battery unit 20 shown in FIG. 3. The end cover assembly 23 includes the end cover 231, the insulator 232, and the electrode terminal 233. The end cover 231 is configured to cover the opening of the housing 21 (not shown in FIG. 4). The electrode terminal 233 is disposed on the end cover 231, and the electrode terminal 233 is configured to be electrically connected to the current collection member 24. The insulator 232 is disposed on a side of the end cover 231 facing the body 221 in the first direction Z, and the insulator 232 is configured to separate the end cover 231 from the battery cell 22. The current collection member 24 includes a first current collection portion 242 configured to be connected to the first connection portion 2221, and in the first direction Z, an accommodating gap 26 is formed between the first current collection portion 242 and the insulator 232, the accommodating gap 26 being configured to accommodate the first connection portion 2221.

The electrode terminal 233 is a component of the end cover assembly 23 for outputting electric energy of the battery unit 20. The electrode terminal 233 on the end cover 231 may be provided in one or two. For example, the electrode terminal 233 on the end cover 231 is provided in two. The two electrode terminals 233 are a positive electrode terminal 233a and a negative electrode terminal 233b, where the positive electrode terminal 233a is electrically connected to the positive electrode tab 222a of the battery cell 22 via one current collection member 24, and the negative electrode terminal 233b is electrically connected to the negative electrode tab 222b of the battery cell 22 via another current collection member 24. The two electrode terminals 233 on the end cover 231 may be spaced apart along a third direction Y, where the third direction Y, the second direction X (shown in FIG. 4), and the first direction Z are perpendicular to each other. In FIG. 5, the third direction Y is a length direction of the end cover assembly 23.

The first current collection portion 242 is a part of the current collection member 24 connected to the first connection portion 2221. In an embodiment in which the current collection member 24 is provided with the foldable portion 241, the foldable portion 241 is disposed at the first current collection portion 242, the first connection portion 2221 is indirectly connected to the foldable portion 241 via the first current collection portion 242, the foldable portion 241 is accommodated in the accommodating gap 26, and in the first direction Z, the foldable portion 241 is located on a side of the first current collection portion 242 facing away from the body 221, and the first connection portion 2221 is located on a side of the first current collection portion 242 facing the end cover assembly 23.

The accommodating gap 26 is formed between the first current collection portion 242 of the current collection member 24 and the insulator 232, and the first connection portion 2221 is accommodated in the accommodating gap 26, such that the space between the first current collection portion 242 and the insulator 232 is effectively used, and the space occupied by the tab 222 inside the housing 21 is reduced, which makes more space for the body 221 of the electrode assembly, and is conducive to increasing the energy density of the battery unit 20.

It should be noted that in this embodiment of this application, the length direction of the end cover assembly 23 is a length direction of the end cover 231, the width direction of the end cover assembly 23 is a width direction of the end cover 231, and the thickness direction of the end cover assembly 23 is a thickness direction of the end cover 231.

In some embodiments, the insulator 232 has an inner surface 2321 facing the body 221, and the insulator 232 is provided with a first concave portion 2322 recessed from the inner surface 2321 in a direction facing away from the body 221, where the first concave portion 2322 is configured to accommodate at least part of the first current collection portion 242. In the first direction Z, the accommodating gap 26 is formed between the first current collection portion 242 and the bottom surface 2322a of the first concave portion 2322.

The inner surface 2321 of the insulator 232 is a surface of the insulator 232 facing the body 221, and the inner surface 2321 may be a flat surface. The first concave portion 2322 is a recessed space in the insulator 232 for accommodating the first current collection portion 242, and the first concave portion 2322 may accommodate part or all of the first current collection portion 242. Under the condition that at least part of the first current collection portion 242 is accommodated in the first concave portion 2322, the first connection portion 2221 is located on the side of the first current collection portion 242 facing the end cover assembly 23 such that the first connection portion 2221 is accommodated in the first concave portion 2322.

The bottom surface 2322a of the first concave portion 2322 is a surface of the concave portion facing the body 221 in the first direction Z and also a surface of the concave portion farthest from the body 221 in the first direction Z. The accommodating gap 26 is a region formed between a surface of the first current collection portion 242 facing away from the body 221 and the bottom surface 2322a of the first concave portion 2322.

In this embodiment of this application, at least part of the first current collection portion 242 is accommodated in the first concave portion 2322, which reduces the space occupied by the first current collection portion 242 inside the housing 21 to make more space for the body 221, and is conducive to increasing the energy density of the battery unit 20.

In some embodiments, the insulator 232 has an outer surface 2323 facing away from the body 221, a first convex portion 2324 is convexly provided at a position of the outer surface 2323 corresponding to the first concave portion 2322, and the first concave portion 2322 is recessed from the inner surface 2321 to inside the first convex portion 2324 in the direction facing away from the body 221. The end cover 231 is provided with a second concave portion, where the second concave portion is configured to accommodate at least part of the first convex portion 2324.

The outer surface 2323 of the insulator 232 is a surface of the insulator 232 facing away from the body 221, and the outer surface 2323 may be a flat surface. The outer surface 2323 and the end cover 231 may be in contact with each other or may have a distance from each other. The first convex portion 2324 protruding from the outer surface 2323 can also be understood as the first convex portion 2324 extending from the outer surface 2323 along the direction facing away from the body 221. The first concave portion 2322 is recessed from the inner surface 2321 to inside the first convex portion 2324 in the direction facing away from the body 221 such that the bottom surface 2322a of the first concave portion 2322 is farther away from the body 221 in the first direction Z than the outer surface 2323 of the insulator 232.

The second concave portion is a recessed space in the end cover 231 for accommodating the first convex portion 2324, and the second concave portion may accommodate part or all of the first convex portion 2324. If the outer surface 2323 of the insulator 232 is in contact with the end cover 231, the entire first convex portion 2324 is accommodated in the second concave portion; and if distance is present between the outer surface 2323 of the insulator 232 and the end cover 231, part of the first convex portion 2324 is accommodated in the second concave portion.

In this embodiment of this application, at least part of the first convex portion 2324 being disposed in the second concave portion can make the insulator 232 and the end cover 231 more compact in structure and reduce the space occupied by the insulator 232 inside the housing 21. The first concave portion 2322 being recessed from the inner surface 2321 to inside the first convex portion 2324 in the direction facing away from the body 221 increases a recess depth of the first concave portion 2322, allowing the first current collection portion 242 to be accommodated at a deeper position of the first concave portion 2322 to make more space for the body 221.

In some embodiments, with reference to FIG. 5 and FIG. 6, FIG. 6 is an axonometric diagram of a current collector shown in FIG. 5. The current collection member 24 further includes a second current collection portion 243, where the second current collection portion 243 is connected to the first current collection portion 242, and the second current collection portion 243 is configured to be electrically connected to the electrode terminal 233. The first current collection portion 242 and the second current collection portion 243 are disposed in a staggered manner in the first direction Z such that the current collection member 24 has an accommodating space 244 formed on a side of the first current collection portion 242 facing the body 221, the accommodating space 244 being configured to accommodate part of the tab 222.

The second current collection portion 243 may be directly or indirectly connected to the electrode terminal 233. For example, the second current collection portion 243 is provided with a boss 245, where the boss 245 runs through the insulator 232 to connect to the electrode terminal 233. The second current collection portion 243 and the first current collection portion 242 may both have a sheet-like structure.

In an embodiment in which foldable portions 241 are connected to two opposite ends of the current collection member 24 in the second direction X, the first current collection portion 242 in the current collection member 24 may also be correspondingly provided in two, both the first current collection portions 242 are connected to the second current collection portion 243, and one first current collection portion 242 is correspondingly provided with one foldable portion 241.

The accommodating space 244 of the current collection member 24 is configured to accommodate part of the tab 222, and in an embodiment in which the tab 222 includes a second connection portion 2222 located on the side of the current collection member 24 facing the body 221, the accommodating space 244 is configured to accommodate at least part of the second connection portion 2222 of the tab 222.

For example, referring to FIG. 7, FIG. 7 is a front view of the current collection member 24 shown in FIG. 6. The current collection member 24 further includes a third current collection portion 246, and the first current collection portion 242, the third current collection portion 246, and the second current collection portion 243 are connected in sequence to form a "Z"-shaped structure such that the first current collection portion 242 and the second current collection portion 243 are disposed in a staggered manner in the first direction Z.

The first current collection portion 242 and the second current collection portion 243 are disposed in a staggered manner in the first direction Z such that the current collection member 24 has the accommodating space 244 formed on the side of the first current collection portion 242 facing the body 221 for accommodating the tab 222, allowing the tab 222 to move up as a whole to make more space for the body 221, which is conducive to increasing the energy density of the battery unit 20.

An embodiment of this application provides a battery 100 including a box 10 and the battery unit 20 provided in any one of the foregoing embodiments, where the box 10 is configured to accommodate the battery unit 20.

An embodiment of this application provides an electric device including the battery 100 provided in any one of the foregoing embodiments.

In addition, referring to FIG. 3 and FIG. 4, an embodiment of this application provides a prismatic battery including a housing 21, a battery cell 22, an end cover assembly 23, and a current collection member 24. The battery cell 22 includes a body 221, a positive electrode tab 222a, and a negative electrode tab 222b, where the positive electrode tab 222a and the negative electrode tab 222b each protrude out of an end of the body 221 in a first direction Z, the positive electrode tab 222a is electrically connected to a positive electrode terminal 233a of the end cover assembly 23 via one current collection member 24, and the negative electrode tab 222b is electrically connected to a negative electrode terminal 233b of the end cover assembly 23 via another current collection member 24. The positive electrode tab 222a and the negative electrode tab 222b both include a first connection portion 2221. The current collection member 24 is provided with foldable portions 241, where the foldable portion 241 is connected to first connection portion 2221, and the foldable portion 241 is foldably disposed on a side of the current collection member 24 facing the end cover assembly 23 in the first direction Z, such that the first connection portion 2221 is located on the side of the current collection member 24 facing the end cover assembly 23.

In such prismatic battery 100, electrical connection between the first connection portion 2221 and the current collection member 24 can be easily implemented via the foldable portion 241, and the foldable portion 241 is folded relative to the current collection member 24 such that the first connection portion 2221 is arranged on the side of the current collection member 24 facing the end cover assembly 23, improving the shaping effect on the positive electrode tab 222a and the negative electrode tab 222b, fully using the space between the current collection member 24 and the end cover assembly 23, and reducing the space occupied by the positive electrode tab 222a and the negative electrode tab 222b inside the housing 21. This can make more space for the body 221 of the electrode assembly and is conducive to improving energy density of the battery unit 20.

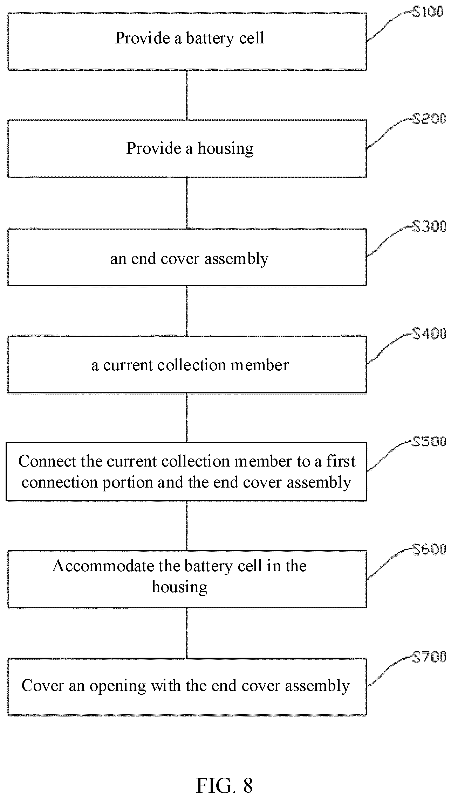

Referring to FIG. 8, FIG. 8 is a flowchart of a manufacturing method of battery unit 20 according to some embodiments of this application. An embodiment of this application provides a manufacturing method of battery cell 20. The manufacturing method includes the following steps.

S100. Provide a battery cell 22. The battery cell 22 includes a body 221 and tabs 222, where the tab 222 protrudes from an end of the body 221 in a first direction Z, and the tab 222 includes a first connection portion 2221.

S200. Provide a housing 21, where the housing 21 has an opening.

S300. Provide an end cover assembly 23.

S400. Provide a current collection member 24.

S500. Connect the current collection member 24 to the first connection portion 2221 and the end cover assembly 23.

S600. Accommodate the battery cell 22 in the housing 21.

S700. Cover the opening with the end cover assembly 23.

In the first direction Z, the current collection member 24 is located on a side of the body 221 facing the end cover assembly 23, and the first connection portion 2221 is located on a side of the current collection member 24 facing the end cover assembly 23.

In the foregoing method, the sequence of step S100, step S200, step S300, and step S400 is not limited. For example, step S400 may be performed first, then step S300 is performed, step S200 is performed, and then step S 100 is performed.

In the above method, the sequence of step S500 and step S600 is not limited either. For example, step S600 may be performed first, and then step S500 is performed.

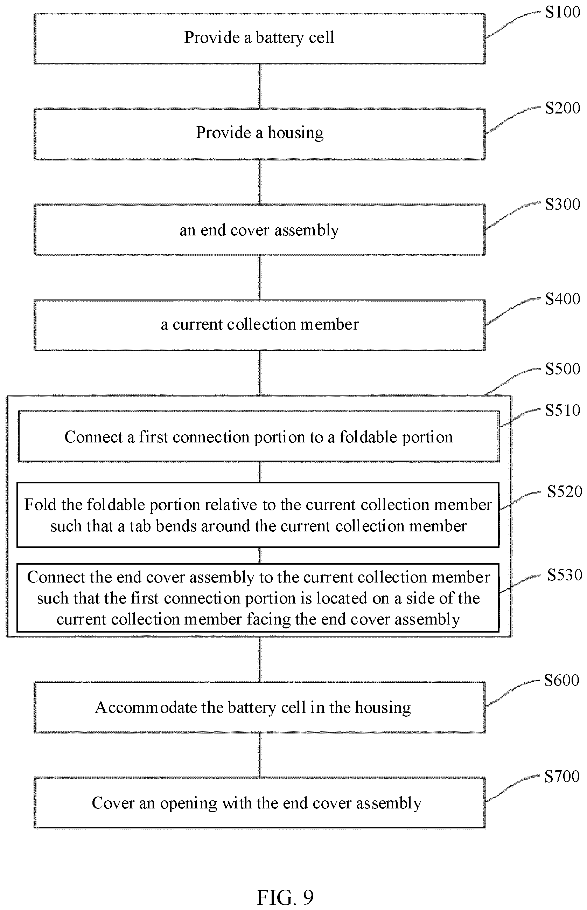

Referring to FIG. 9, FIG. 9 is a flowchart of a manufacturing method of battery unit 20 according to some other embodiments of this application. In an embodiment in which the current collection member 24 is provided with foldable portions 241, step S500 may include the following steps.

S510. Connect the first connection portion 2221 to the foldable portion 241.

S520. Folding the foldable portion 241 relative to the current collection member 24 such that the tab 222 bends around the current collection member 24.

S530. Connect the end cover assembly 23 to the current collection member 24 such that the first connection portion 2221 is located on a side of the current collection member 24 facing the end cover assembly 23.

It should be noted that reference may be made to the battery unit 20 provided in the foregoing embodiments for related structures of a battery unit 20 manufactured using the manufacturing method provided in the foregoing embodiments. Details are not repeated herein.

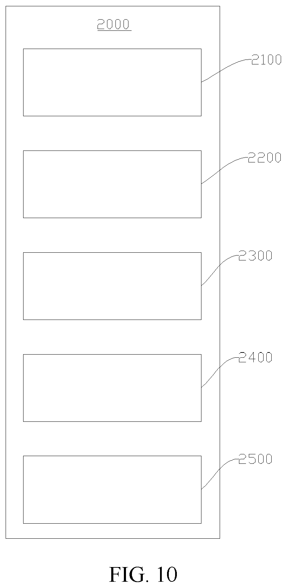

Referring to FIG. 10, FIG. 10 is a schematic block diagram of a manufacturing device 2000 of battery unit 20 according to some embodiments of this application. An embodiment of this application further provides a manufacturing device 2000 of battery cell 20. The manufacturing device 2000 includes a first provision means 2100, a second provision means 2200, a third provision means 2300, a fourth provision means 2400, and an assembly means 2500.

The first provision means 2100 is configured to provide a battery cell 22. The battery cell 22 includes a body 221 and tabs 222, where the tab 222 protrudes from an end of the body 221 in a first direction Z, and the tab 222 includes a first connection portion 2221. The second provision means 2200 is configured to provide a housing 21, where the housing 21 has an opening. The third provision means 2300 is configured to provide an end cover assembly 23. The fourth provision means 2400 is configured to provide a current collection member 24. The assembly means 2500 is configured to connect the current collection member 24 to the first connection portion 2221 and the end cover assembly 23; the assembly means 2500 is further configured to accommodate the battery cell 22 in the housing 21; and the assembly means 2500 is further configured to cover the opening with the end cover assembly 23.

In the first direction Z, the current collection member 24 is located on a side of the body 221 facing the end cover assembly 23, and the first connection portion 2221 is located on a side of the current collection member 24 facing the end cover assembly 23.

It should be noted that reference may be made to the battery unit 20 provided in the foregoing embodiments for related structures of a battery unit 20 manufactured using the manufacturing device 2000 provided in the foregoing embodiments. Details are not repeated herein.

It should be noted that, without conflict, the embodiments and features in the embodiments in this application may be combined with each other.

The foregoing embodiments are merely intended for describing the technical solutions of this application but not for limiting this application. Persons skilled in the art understand that this application may have various modifications and variations. Any modifications, equivalent replacements, and improvements made without departing from the spirit and principle of this application shall fall within the protection scope of this application.

## Claims

1. A battery unit, comprising:
a battery cell comprising a body and tabs, wherein the tab protrudes from an end of the body in a first direction;
a housing having an opening, wherein the housing is configured to accommodate the battery cell;
an end cover assembly configured to cover the opening; and
a current collection member, wherein in the first direction, the current collection member is located on a side of the body facing the end cover assembly, and the current collection member is configured to connect the tab and the end cover assembly;
wherein the tab comprises a first connection portion configured to be connected to the current collection member, and in the first direction, the first connection portion is configured to be located on a side of the current collection member facing the end cover assembly.

2. The battery unit according to claim 1, wherein the current collection member is provided with foldable portions, the foldable portion being foldably disposed on the side of the current collection member facing the end cover assembly in the first direction, and the foldable portion being configured to be connected to the first connection portion.

3. The battery unit according to claim 2, wherein in the first direction, the first connection portion and the foldable portion are stacked, and the first connection portion is located on a side of the foldable portion facing the end cover assembly.

4. The battery unit according to claim 2 or 3, wherein the foldable portion is foldably connected to an edge of the current collection member.

5. The battery unit according to any one of claims 2 to 4, wherein foldable portions are connected to two opposite ends of the current collection member in a second direction, the second direction being perpendicular to the first direction; and
the battery cell comprises two tabs spaced apart on the body along the second direction, the first connection portions of the two tabs being connected to two foldable portions respectively.

6. The battery unit according to any one of claims 2 to 5, wherein the foldable portion and the current collection member are integrally formed.

7. The battery unit according to any one of claims 1 to 6, wherein the tab bends around the current collection member; and
the tab further comprises a second connection portion, wherein the second connection portion is configured to connect the body and the first connection portion, and in the first direction, the second connection portion is located on a side of the current collection member facing the body.

8. The battery unit according to any one of claims 1 to 7, wherein the end cover assembly comprises:
an end cover configured to cover the opening;
an electrode terminal provided on the end cover and configured to be electrically connected to the current collection member; and
an insulator provided on a side of the end cover facing the body in the first direction, wherein the insulator is configured to separate the end cover from the battery cell; wherein
the current collection member comprises a first current collection portion configured to be connected to the first connection portion, and in the first direction, an accommodating gap is formed between the first current collection portion and the insulator, the accommodating gap being configured to accommodate the first connection portion.

9. The battery unit according to claim 8, wherein the insulator has an inner surface facing the body, and the insulator is provided with a first concave portion recessed from the inner surface in a direction facing away from the body, the first concave portion being configured to accommodate at least part of the first current collection portion; and
in the first direction, the accommodating gap is formed between the first current collection portion and the bottom surface of the first concave portion.

10. The battery unit according to claim 9, wherein the insulator has an outer surface facing away from the body, a first convex portion is convexly provided at a position of the outer surface corresponding to the first concave portion, and the first concave portion is recessed from the inner surface to inside the first convex portion in the direction facing away from the body; and the end cover is provided with a second concave portion, the second concave portion being configured to accommodate at least part of the first convex portion.

11. The battery unit according to any one of claims 8 to 10, wherein the current collection member further comprises a second current collection portion, the second current collection portion being connected to the first current collection portion, and the second current collection portion being configured to be electrically connected to the electrode terminal; and
the first current collection portion and the second current collection portion are disposed in a staggered manner in the first direction such that the current collection member has an accommodating space formed on a side of the first current collection portion facing the body, the accommodating space being configured to accommodate part of the tab.

12. A battery, comprising:
the battery unit according to any one of claims 1 to 11; and
a box configured to accommodate the battery unit.

13. An electric device comprising the battery according to claim 12.

14. A manufacturing method of battery unit, wherein the manufacturing method comprises:
providing a battery cell, wherein the battery cell comprises a body and tabs, the tab protruding from an end of the body in a first direction, and the tab comprising a first connection portion;
providing a housing, wherein the housing has an opening;
providing an end cover assembly;
providing a current collection member;
connecting the current collection member to the first connection portion and the end cover assembly;
accommodating the battery cell in the housing; and
covering the opening with the end cover assembly;
wherein in the first direction, the current collection member is located on a side of the body facing the end cover assembly, and the first connection portion is located on a side of the current collection member facing the end cover assembly.

15. The manufacturing method of battery unit according to claim 14, wherein the current collection member is provided with foldable portions; and
the connecting the current collection member to the tab and the end cover assembly comprises:
connecting the first connection portion to the foldable portion;
folding the foldable portion relative to the current collection member such that the tab bends around the current collection member; and
connecting the end cover assembly to the current collection member such that the first connection portion is located on the side of the current collection member facing the end cover assembly.

16. A manufacturing device of battery unit, wherein the manufacturing device comprises:
a first provision means configured to provide a battery cell, wherein the battery cell comprises a body and tabs, the tab protruding from an end of the body in a first direction, and the tab comprising a first connection portion;
a second provision means configured to provide a housing, wherein the housing has an opening;
a third provision means configured to provide an end cover assembly;
a fourth provision means configured to provide a current collection member; and
an assembly means configured to connect the current collection member to the first connection portion and the end cover assembly, further configured to accommodate the battery cell in the housing, and further configured to cover the opening with the end cover assembly;
wherein in the first direction, the current collection member is located on a side of the body facing the end cover assembly, and the first connection portion is located on a side of the current collection member facing the end cover assembly.
